**Europäisches Patentamt**

(19) **European Patent Office**

**·Office européen des brevets**

(11) Veröffentlichungsnummer : **0 215 077 B1**

# (12) EUROPÄISCHE PATENTSCHRIFT

(45) Veröffentlichungstag der Patentschrift :
30.08.89

(21) Anmeldenummer : 86901850.7

(22) Anmeldetag : 06.03.86

(86) Internationale Anmeldenummer :
PCT/EP 86/00118

(87) Internationale Veröffentlichungsnummer :
WO/8605066 (12.09.86 Gazette 86/20)

(51) Int. Cl.⁴ : **A 01 G 9/14, E 04 D 3/06**

(54) **TERRASSENVERGLASUNG.**

(30) Priorität : 08.03.85 DE 3508395

(43) Veröffentlichungstag der Anmeldung :
25.03.87 Patentblatt 87/13

(45) Bekanntmachung des Hinweises auf die Patenterteilung : 30.08.89 Patentblatt 89/35

(84) Benannte Vertragsstaaten :
AT BE CH DE FR GB IT LI LU NL SE

(56) Entgegenhaltungen :
CH–A– 452 155
DE–A– 2 820 508
FR–A– 2 428 968
GB–A– 1 575 193

(73) Patentinhaber : JANKE, Bernard
Löhestrasse 5
D-8580 Bayreuth (DE)

DRECHSEL, Ludwig
Friedrichstrasse 36
D-8580 Bayreuth (DE)

(72) Erfinder : JANKE, Bernard
Löhestrasse 5
D-8580 Bayreuth (DE)
Erfinder : DRECHSEL, Ludwig
Friedrichstrasse 36
D-8580 Bayreuth (DE)

(74) Vertreter : Grättinger, Günter
Wittelsbacherstrasse 5 Postfach 16 49
D-8130 Starnberg (DE)

Beschreibung

Die Erfindung betrifft eine Terrassenverglasung, welche im wesentlichen durch ein Dach gebildet ist, welches sich zwischen einer Hauswand und einem an die Hauswand anschließenden Terrassenboden erstreckt.

Eine aus mehreren Bauelementen aufgebaute Bedachung ist aus der CH-A-452 155 bekannt. Die einzelnen Elemente bestehen aus bogenförmigen Binderstegen und eine diese verbindende Wandungshaut aus faserverstärktem Kunststoff. Mehrere Elemente werden an ihren Bindersteggen miteinander verbunden, sodaß die Länge der Bedachung durch die Anzahl der miteinander verbundenen Elemente wählbar ist. Durch die Bogenform der Bindersteg sind die Elemente freitragend; sie können somit einander gegenübergestellt ein Volldach und an eine Wand angelehnt ein Halbdach bilden.

In der DE-A-28 20 508 ist ein Kleinhaus beschrieben, welches ebenfalls aus mehreren, an ihren Rahmen miteinander verbundenen Elementen aufgebaut ist. Dabei sind die Rahmen zur Erhöhung der Stabilität und zur Vergrösserung des nutzbaren Innenraumes gebogen ausgeführt. Das beschriebene Kleinhaus besitzt zwei Stirnwände, welche ebenfalls aus mit Platten bestückten Rahmen aufgebaut sind. Die das Dach bildenden Platten sind mit den Rahmenteilen fest verbunden.

Der vorliegenden Erfindung liegt die Aufgabe zugrunde, die bekannten, aus Einzelelementen vorgefertigten, einfach montierbaren, hinsichtlich Höhe und Tiefe an die jeweiligen Gegebenheiten anpaßbaren Terrassenverglasungen zu verbessern.

Eine diesen Vorstellungen genügende Terrassenverglasung weist nach dem erfindungsgemäßen Vorschlag die Merkmale a) bis c) gemäß Patentanspruch 1 auf.

Demnach besteht die Terrassenverglasung im wesentlichen aus ein Dach zwischen Wand und Boden bildenden Bogenelementen, wobei je nach Länge der Terrassenverglasung eine beliebige Zahl derartiger Bogenelemente an ihren seitlichen Rahmenteilen dichtend aneinander angesetzt und miteinander verbunden werden können. Die seitlichen Rahmenteile sind dabei zweckmäßig einstükkige bogenförmige Träger, bevorzugt aus Holz z. B. in Art sog. Leimbinder. Die seitlichen Rahmenteile sind an den Enden durch entsprechende Querrahmen zu einem geschlossenen Rahmen verbunden. In bzw. auf diesem Rahmen sind Profilteile vorgesehen, welche Führungen für Glasscheiben ausbilden, wobei jedes Bogenelement zwei Glasscheiben aufweist, die sich gegenseitig überlappen, nämlich eine äußere Glasscheibe, welche in einer äußeren Führung verschieblich aufgenommen ist, und eine innere etwas kürzer als die äußere Glasscheibe ausgebildete Glasscheibe, welche in einer inneren Führung verschiebbar aufgenommen ist. Um ebene Glasscheiben verwenden zu können, dürfen diese eine gewisse Dicke, etwa 4mm, nicht überschreiten, weil sie sich sonst nicht mehr entsprechend der Biegung der Bogenelemente verformen lassen.

Ähnlich dem Dach sind auch die Giebelteile, d. h. die das Dach stirnseitig abschließender Wände der Terrassenverglasung aus vorgefertigten einzelnen Giebelelementen zusammengesetzt. Diese umfassen ein quadratisches Grundelement, welches auf dem Terrassenboden anschließend an die vorhandene Gebäudewand aufgestellt wird, und mit seiner freien Ecke das jeweils zugeordnete Bogenelement stüzt. Die freibleibenden Ausschnitte zwischen dem quadratischen Grundelement und dem zugehörigen Bogenelement werden geschlossen durch zwei Auschlußelemente, gem. Merkmal c) von Patentanspruch 1.

Dementsprechend besitzen die beiden Anschlußelemente jeweils einen Rahmenbogen; beide Rahmenbogen bilden zusammen einen Bogen, welcher den Bogenelementen entspricht, wobei die Rahmenbogen gleiche oder unterschiedliche Bogenabschnitte bilden können. Im Falle gleicher Bogenabschnitte sind die beiden Anschlußelemente identisch. Im Falle unterschiedlicher Bogenabschnitte ergeben sich unterschiedliche Abmessungen in der Höhe und Tiefe der Terrasenverglasung. Selbstvertändlich können im letztgenannten Fall die beiden ungleichen Anschlußelemente beliebig ausgetauscht werden so daß eine geringere Tiefe einer größeren Höhe der Terrassenverglasung, bzw. umgekehrt entspricht. Mit drei verschiedenen Anschlußelementen können also Terrassenverglasungen in drei verschiedenen Höhen bzw. Tiefen gebaut werden.

Um die Konstruktion gegen seitliche Schubkräfte d. h. in Längsrichtung der Terrassenverglasung wirkende Schubkräfte auszusteifen, ist in einer Ausgestaltung vorgesehen, daß zwischen den seitlichen Rahmenteilen der Bogenelemente im Bereich ihrer oberen Endabschnitte Quer- und/ oder Diagonalstreben vorgesehen sind.

Diese Streben können gleichzeitig als Träger für Auflagepuffer oder Rollen dienen, welche dicht unter der äußeren Scheibe angeordnet sind, um diese zu stützen, wenn sie sich unter einer Schneelast durchbiegt. Eine derartige Unterstützung ist zweckmäßig, da aus den oben bereits erläuterten Gründen relativ dünne Glasscheiben verwendet werden müssen, die keine großen Schneelasten aufnehmen können.

Zur Vereinfachung der Herstellung, insbesondere der Bogenelemente, ist ferner vorgesehen, daß die seitlichen Rahmenteile jeweils im Bereich ihrer oberen und unteren Endabschnitte geradlinig ausgebildet sind.

Demzufolge ist es aus geometrischen Überlegungen zweckmäßig, daß die seitlichen Rahmenteile jeweils im Bereich zwischen ihren oberen und unteren Endabschnitten einen Kreisbogen beschreiben, dessen Radius etwas kleiner ist als die Diagonale diese Grundelements. Bei vorgegebener Höhe, bzw. Tiefe der Terrassenverglasung ergibt sich dabei eine optimale Innenraumgestaltung.

Aus Sicherheitsgründen ist vorgesehen, daß die äußere Glasscheibe der Bogenelemente länger ist als die innere, derart, daß erst bei entsprechend weit nach oben geschobener innerer Scheibe ein Griffteil zur Betätigung der äußeren Scheibe freigegeben wird. Gleichzeitig wird durch diese Maßnahme sichergestellt, daß die innere Scheibe durch die äußere Scheibe von oben überlappt wird, so daß kein Regenwasser eindringen kann.

Im Rahmen der Erfindung werden besondere Griffteile zum Verstellen der beiden Glasscheiben vorgeschlagen. Diese Griffteile sind nicht nur so ausgebildet, daß sie die Scheiben selbst aussteifen ; sie erfüllen darüberhinaus auch noch einige wesentliche Sicherheitsanforderungen, indem sie seitlich vorspringende Nocken besitzen, die mit Anschlägen an den Rahmenteilen zusammenwirken. Nur bei Verstellen eines Betätigungsglieds dieser Griffteile werden die rahmenseitigen Anschläge durch die Nocken freigegeben, so daß ein Verschieben der Glasscheibe möglich ist. In der Ausgangslage befinden sich die Betätigungsglieder der Griffteile unter der Wirkung einer Federkraft stets in einer die Nocken mit den Anschlägen sperrenden Position. Dadurch ist es ausgeschlossen, daß die nach oben geschobenen Scheiben ungewollt in ihren Führungen nach unten gleiten.

Eine besondere Ausgestaltung der Griffteile, insbesondere ihrer Betätigungsglieder ergibt sich aus den Unteransprüchen 11 bis 14.

Die Führungen für die beiden Glasscheiben sind bevorzugt aus übereinander gesteckten Profilteilen gebildet, wobei ein Außen- und ein Innenprofil über ein Zwischenprofil verbunden sind, welches mit dem jeweiligen Außen- bzw. Innenprofil eine Scheibenführung bildet. Dabei kann zur Vereinfachung der Herstellung das Außenprofil identisch mit dem Innenprofil ausgebildet sein ; beide Profile können bei spiegelbildlicher Anordnung über das Zwischenprofil aus Metall oder Kunststoff miteinander verbunden sein. Durch Lösen einer Steckverbindung besteht die Möglichkeit, das Außenprofil nach oben abzuheben, so daß die äußere Glasscheibe leicht ausgebaut werden kann. Durch eine entsprechende Steckverbindung zwischen dem Zwischenprofil und dem Innenprofil besteht die Möglichkeit, in der gleichen Weise auch die innere Scheibe auszubauen.

Selbstverständlich sind im Rahmen der Erfindung Verbindungsmittel vorgesehen, welche jeweils zwei benachbarte seitliche Rahmenteile zweier angrenzender Bogenelemente miteinander dichtend verbinden.

Die für jedes Giebelteil neben dem quadratischen Grundelement erforderlichen beiden Anschlußteile bilden üblicherweise gesonderte Giebelelemente ; sie können aber auch an einem durchgehenden Rahmenbogen ausgebildet sein, der bei der Montage über die freie Ecke des quadratischen Grundelements gelegt wird.

Im folgenden wird ein Ausführungsbeispiel der Erfindung anhand der Zeichnung erläutert. Es zeigt :

Fig. 1 eine schematische Giebelansicht der Terrassenverglasung

Fig. 2 eine Vorderansicht der Terrassenverglasung

Fig. 3 eine Draufsicht auf die Terrassenverglasung

Fig. 4 eine schematische Giebelansicht der Terrassenverglasung in einer Variante

Fig. 5 eine schematische Giebelansicht der Terrassenverglasung in einer weiteren Variante

Fig. 6 einen schematischen Vertikalschnitt durch ein Bogenelement des Daches einer Terrassenverglasung

Fig. 7 einen Schnitt in der Ebene VII-VII der Fig. 2

Fig. 8 eine Ansicht der Griffleiste im Eckbereich der inneren Scheibe

Fig. 9 eine Seitenansicht zu Fig. 8

Fig. 10 eine Ansicht der Griffleiste im Eckbereich der äußeren Scheibe

Fig. 11 eine Seitenansicht zu Fig. 10

Fig. 12 einen Schnitt in der Ebene XII-XII der Fig. 3

Fig. 13 eine Rolle zur Unterstützung der äußeren Scheibe

Fig. 14 eine Seitenansicht zu Fig. 13

Fig. 15 einen Ausschnitt gem. XV-XV der Fig. 4 und

Fig. 16 einen Ausschnitt gem. XVI-XVI der Fig. 1.

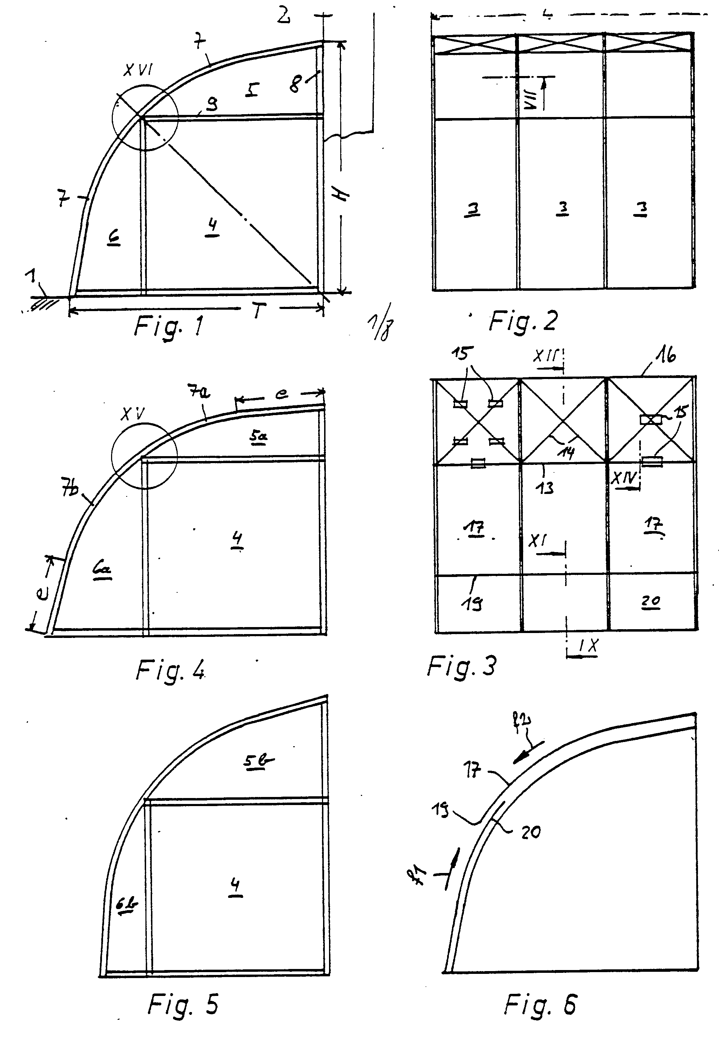

Eine Terrassenverglasung gem. den Figuren 1 bis 3 überdacht einen Terrassenboden 1 über einer Fläche mit der Tiefe T und der Länge L. Sie erstreckt sich nach oben bis in eine Höhe H einer vorhandenen Gebäudewand 2, derart, daß mehrere der Länge nach hintereinander angeordnete Bogenelemente 3 ein gewölbtes Dach bilden, welches an beiden Stirnseiten jeweils durch Giebelteile, die aus jeweils drei Giebelelementen zusammengesetzt sind, verschlossen ist.

Die Giebelelemente umfassen ein quadratisches Grundelement 4, ein oberes Anschlußelement 5 und ein seitliches Anschlußelement 6. Je nach der Dimensionierung dieser Anschlußelemente 5, 6 lassen sich unterschiedliche Höhen und Tiefen der Terrassenverglasung ausbilden.

Während nach Fig. 1 die beiden Anschlußelemente 5, 6 identisch ausgebildet sind, ist nach Fig. 4 das obere Anschlußelement 5a niedriger, das seitliche Anschlußelement 6a tiefer ausgebildet ; in Fig. 5 sind die Anschlußelemente gem. Fig. 4 vertauscht, d. h. das obere Anschlußelement 5b bei Fig. 5 entspricht dem seitlichen Anschlußelement 6a bei Fig. 4 und das seitliche Anschlußelement 6b bei Fig. 5 entspricht dem oberen Anschlußelement 5a bei Fig. 4.

Grundsätzlich ist von Bedeutung, daß somit mit drei verschieden großen Anschlußelementen, nämlich dem Anschlußelement gem. Fig. 1 und den beiden Anschlußelementen gem. Fig. 4 bzw. Fig. 5 insgesamt drei verschiedene Höhen bzw.

Tiefen der Terrassenverglasung verwirklicht werden können, wobei das Grundelement 4 stets dasselbe bleibt. Jedes Anschlußelement 5, 5a, 5b bzw. 6, 6a 6b besteht jeweils aus einem Rahmenbogen und zwei daran anschließenden rechtwinkeligen Rahmenschenkeln. Die beiden Rahmenbogen 7a, 7b gem. Fig. 4 besitzen an ihren äußeren Enden jeweils einen geradlinigen Abschnitt e. Gleiches gilt für den Rahmenbogen 7 gem. Fig. 1.

Am Beispiel der Fig. 1 erläutert, besteht das obere Anschlußelement 5 aus dem Rahmenbogen 7, einem vertikalen Rahmenschenkel 8 und einem horizontalen Rahmenschenkel 9, dessen Länge mit einer Seite des Grundelements 4 übereinstimmt. Es versteht sich von selbst, daß die Anschlußteile und das Grundelement 4 jeweils Wandteile aus Glas bilden, die von einem Rahmen eingefaßt sind.

Anstelle von Glas kann auch ein transparenter oder sogar ein undurchsichtiger Kunststoff in Frage kommen; dies gilt bevorzugt für das Grundelement 4.

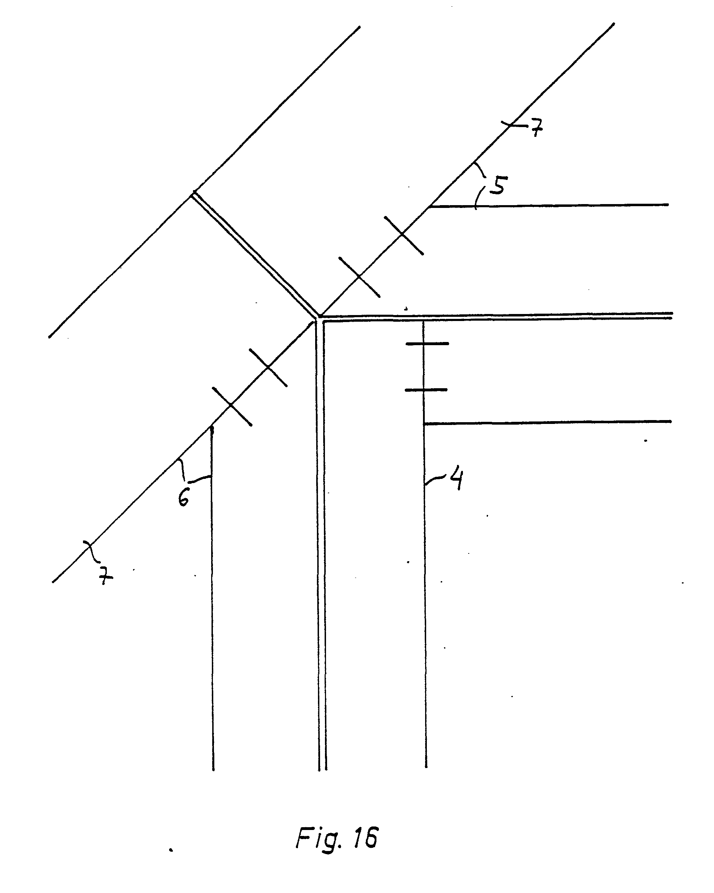

Fig. 16 zeigt vergrößert den Knotenpunkt zwischen den beiden Anschlußteilen und dem Grundelement 4 bei identischen Anschlußteilen 5, 6; der Rahmenbogen 7 der Anschlußteile 5, 6 verlaufen hier etwa unter 45° zur Vertikalen.

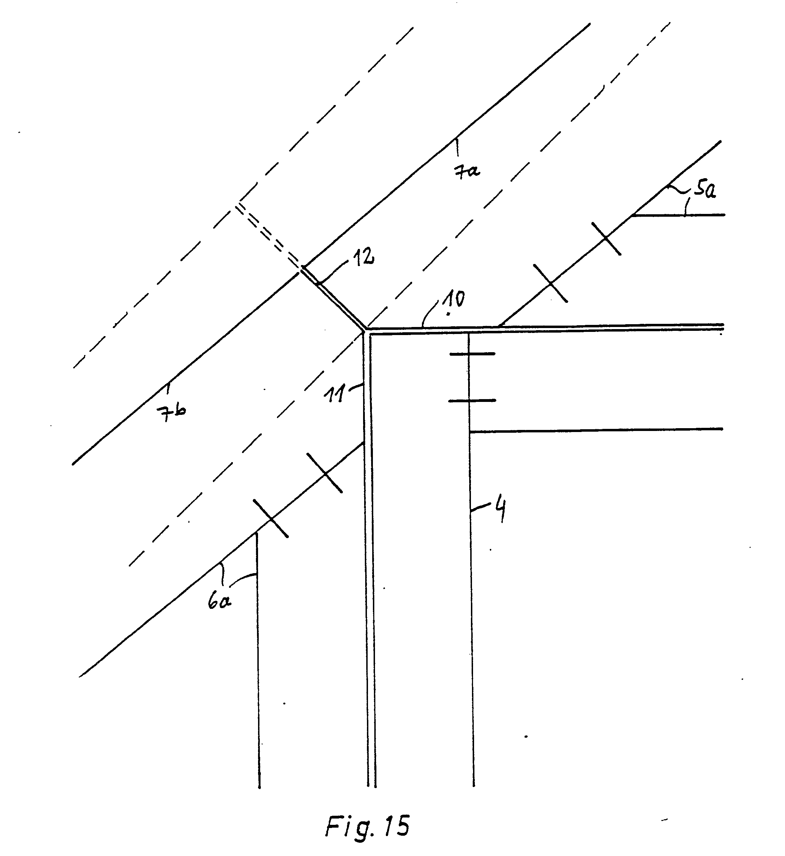

In Fig. 15 ist die gleiche Situation zu dem in Fig. 4 dargestellten Giebel teil gezeichnet. Hier besitzen die Rahmenbogen 7a, 7b schräge Abschnitte 10, 11, d. h. die Ecke des quadratischen Grundelements 4 sticht geringfügig in die Rahmenbogen im Bereich ihrer Trennfuge 12 hinein. Diese geringfügige Korrektur der Geometrie ist erforder lich, um bei ungleichen Anschlußteilen 5a, 6a, bzw. 5b, 6b den Boden bzw. Wandanschluß der Rahmenbogen 7a, 7b zu gewährleisten. Zum besseren Vergleich mit Fig. 16 ist die dortige Position der Rahmenbogen 7 in der Fig. 15 strichliert eingezeichnet.

Die Figuren 2, 3 und 6 zeigen einige schematische Ansichten der Terrassenverglasung. In Fig. 2 erkennt man drei nebeneinander angeordnete Bogenelemente 3, wobei sich die Länge L der Terrassenverglasung aus der jeweils verwendeten Anzahl derartiger seitlich aneinandergereihter Bogenelemente 3 ergibt.

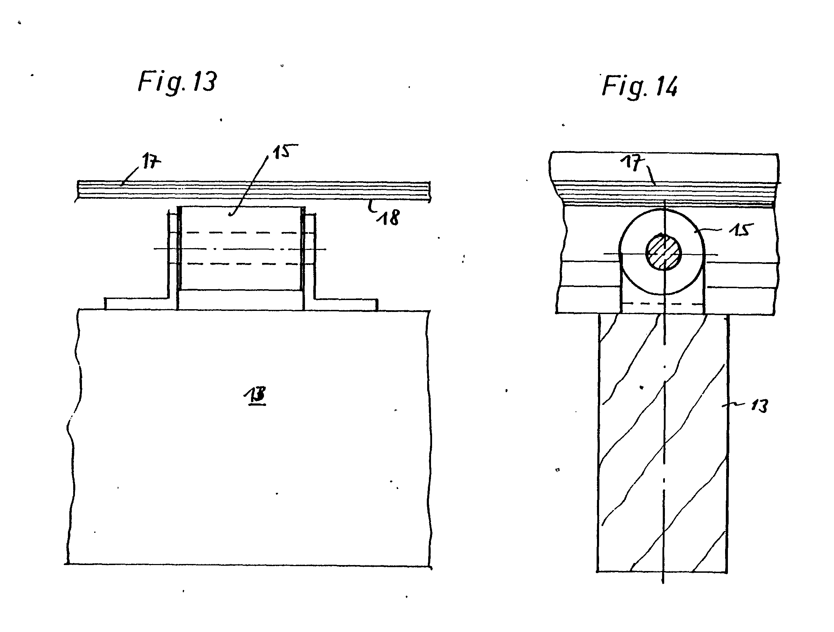

Aus der Draufsicht gem. Fig. 3 ist erkennbar, daß die Bogenelemente im Bereich ihrer oberen Endabschnitte jeweils nahe dem oberen Querrahmen 16 durch Querstreben 13 und Diagonalstreben 14 ausgesteift sind. An ihrer Oberseite tragen diese Streben Rollen, 15, wobei verschiedene Anordnungen derartiger Rollen 15 denkbar sind. Während im Bereich des linken Bogenelements fünf Rollen 15 über die gesamte Stützfläche verteilt vorgesehen sind, können auch zwei Stützrollen 15 genügen, wie innerhalb des rechten Bogenelements der Fig. 3 dargestellt. Die Figuren 13 und 14 zeigen eine Stützrolle 15 gem. der Schnittebene XIV-XIV in Fig. 3. Hier ist die Stützrolle 15 auf einer Querstrebe 13 aufgesetzt, und zwar so, daß bei unbelasteter äußerer Glasscheibe 17 nur ein sehr kleiner Abstand zwischen deren Unterseite 18 und der Stützrolle 15 besteht. Wird die äußere Scheibe durch eine Schneelast belastet, so biegt sie sich durch und findet eine Stütze auf der Rolle 15, welche bevorzugt mit einem elastischen Material ummantelt ist bzw. aus solchem besteht.

Während in Fig. 3 zu jedem Bogenelement lediglich der untere Rand 19 der äußeren Scheibe 17 eingezeichnet ist, erkennt man in Fig. 6 wie sich äußere Scheibe 17 und innere Scheibe 20 überlappen. Die beiden Pfeile f1, f2 bedeuten die Verschieberichtungen für die beiden Scheiben 17, 20 aus der in Fig. 6 gezeichneten verschlossenen Terrassenverglasung an.

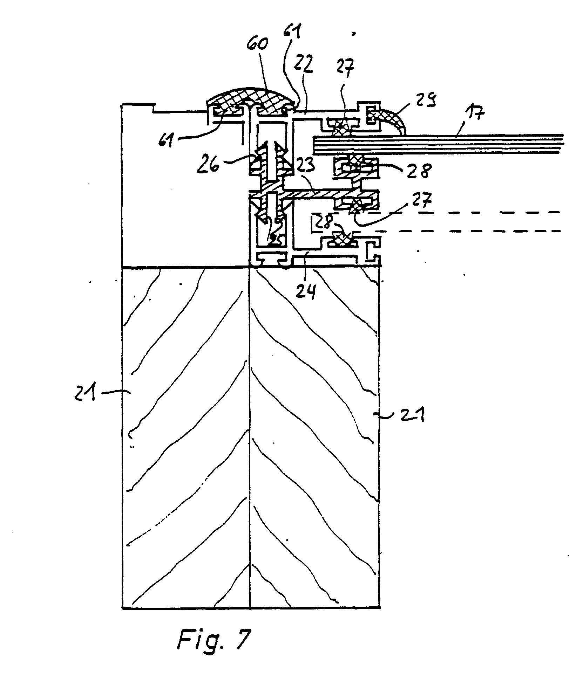

Fig. 7 zeigt einen Querschnitt durch zwei miteinander verbundene Rahmenbogen 21. Beide bestehen aus Holzbindern, auf welche Metallbzw. Kunststoffprofile zur Aufnahme der beiden Glasscheiben 17, 20 aufgesetzt sind. Diese Profilteile sind zusammengesetzt aus übereinandergesteckten Einzelprofilen, nämlich einem Außenprofil 22, einem Zwischenprofil 23 und einem Innenprofil 24. Das Außenprofil 22 und das Innenprofil 24 weisen die gleiche Querschnittsform auf; sie sind lediglich spiegelbildlich angeordnet. Beide Profile, die bevorzugt aus Metall bestehen, sind verbunden durch ein bevorzugt aus Kunststoff bestehendes Zwischenprofil 23. Elastische Lappen 25 des Zwischenprofil hintergreifen Vorsprünge 26 an den Innenwänden von Nuten, in welche die Lappen 25 eindringen. Die beiden Glasplatten 17, 20 sind geführt zwischen jeweils einer oberen Streifendichtung 27 und einer unteren Streifendichtung 28, welche jeweils in entsprechenden Nuten der anschließenden Profile gehalten sind. Zur weiteren Verbesserung der Abdichtung gegen eindringendes Regenwasser besitzt das Außenprofil 22 noch eine seitliche Dichtungslippe 29, welche von oben auf die äußere Glasscheibe 17 aufgesetzt ist. Die beiden aneinanderliegenden Rahmenbogen 21 sind an ihrem Außenumfang mittels einer gleichzeitig dichtenden Verbindungsleiste 60 verbunden, welche an ihrer Unterseite Vorsprünge 61 aufweist, die in entsprechende Nuten der Außenprofile 22 beider Rahmenbogen eingeknöpft sind.

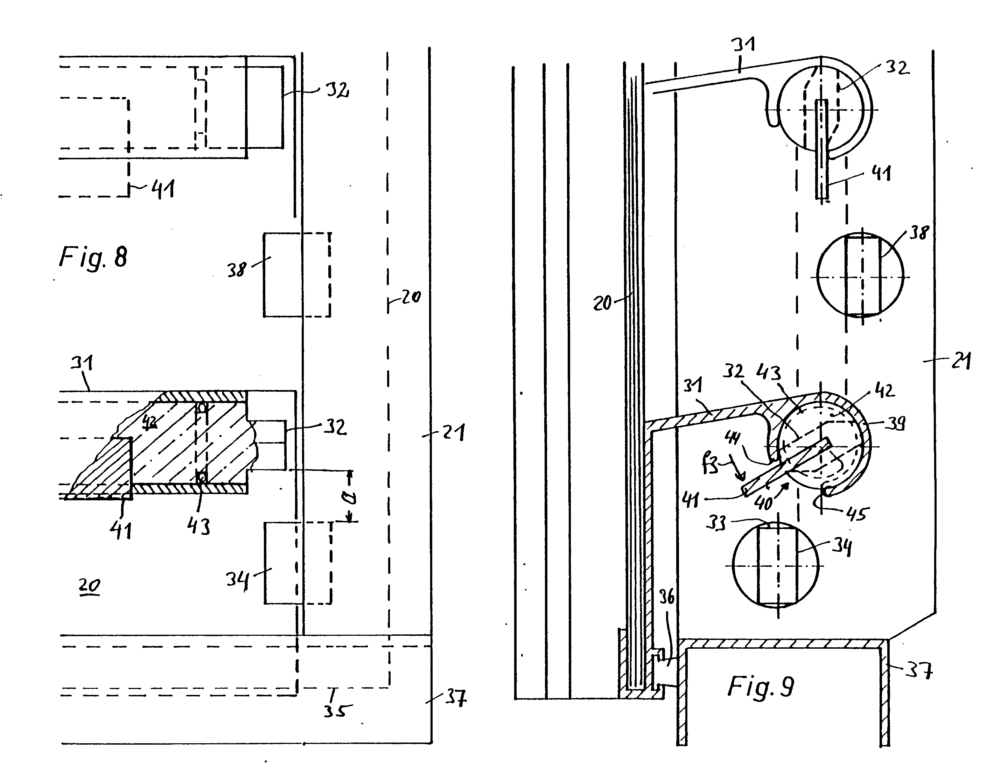

Die Figuren 8 und 9 (Fig. 9 entspricht einem Schnitt inder Ebene IX-IX der Fig. 3) zeigen. die untere rechte Ecke der inneren Glasscheibe 20, welche sich in einem Abstand a kurz vor Erreichen ihrer unteren Anschlagstellung befindet. Ein Griffteil 31 besitzt einen seitlich abstehenden Nocken 32, welcher in der in Fig. 9 unten gezeigten Drehstellung gegen die obere Seite 33 eines rahmenfesten Anschlags 34 auffährt. Das Griffteil 31 ist an der Innenseite der inneren Scheibe befestigt. Mit einer parallel zur Endkante 35 der inneren Scheibe 20 verlaufenden Dichtung 36 wird der Spalt zwischen dem Griffteil 31 und einer Sockelschiene 37, welche die beiden Rahmenbogen 21 eines Bogenelements 3 verbindet, nach außen abgedichtet. Die Sockelschiene 37 bildet den unteren Querrahmen jedes Bogenelements.

Über dem unteren Anschlag 34, der den Endanschlag bildet, ist ein weiterer Anschlag 38 eingezeichnet, welcher das weitere Anheben der inneren Scheibe 20 am Griffteil in der gezeichneten unteren Stellung sperren würde.

Um dies zu verhindern, wird ein im Inneren des zylindrischen Gehäuses 39 des Griffteils gelagertes Betätigungsglied 40 dadurch verstellt, daß eine Betätigungsleiste 41 gem. Pfeil f3 verschwenkt wird, wodurch der Nocken 32 die in der oberen (hilfsweise) Darstellung der Griffleiste 31 gezeigte Position einnimmt, in welcher der Nocken 32 an dem Anschlag 38 vorbeibewegt werden kann. Das Betätigungsglied 40 umfaßt demnach ein im Inneren des Gehäuses 39 des Griffteils 31 gelagertes Zylinderteil 42, an dessen stirnseitigen Enden die Nocken 32 ausgebildet sind und in welchem die Betätigungsleiste 41 aufgenommen ist. Das Zylinderteil 42 ist mittels einer Feder 43 gegenüber dem Gehäuse 39 des Griffteils 31 derart vorgespannt, daß die Betätigungsleiste 41 in ihrer Ausgangsstellung stets gegen den oberen Rand 44 der Öffnung des Gehäuses 39 des Griffteils 31 angedrückt wird. Erst beim Betätigen des Betätigungsglieds, d. h. beim Anheben der inneren Scheibe 20, wird die Betätigungsleiste 41 gem. Pfeil f3 verschwenkt, bis sie am unteren Rand 45 der Öffnung des Gehäuses 39 anliegt. Diese Position ist in der oberen Darstellung des Griffteils 31 gezeigt, welche lediglich zur Verdeutlichung vorgesehen ist (da in Wirklichkeit selbstverständlich nur ein einziges, nämlich das schraffiert dargestellte Griffteil vorgesehen ist).

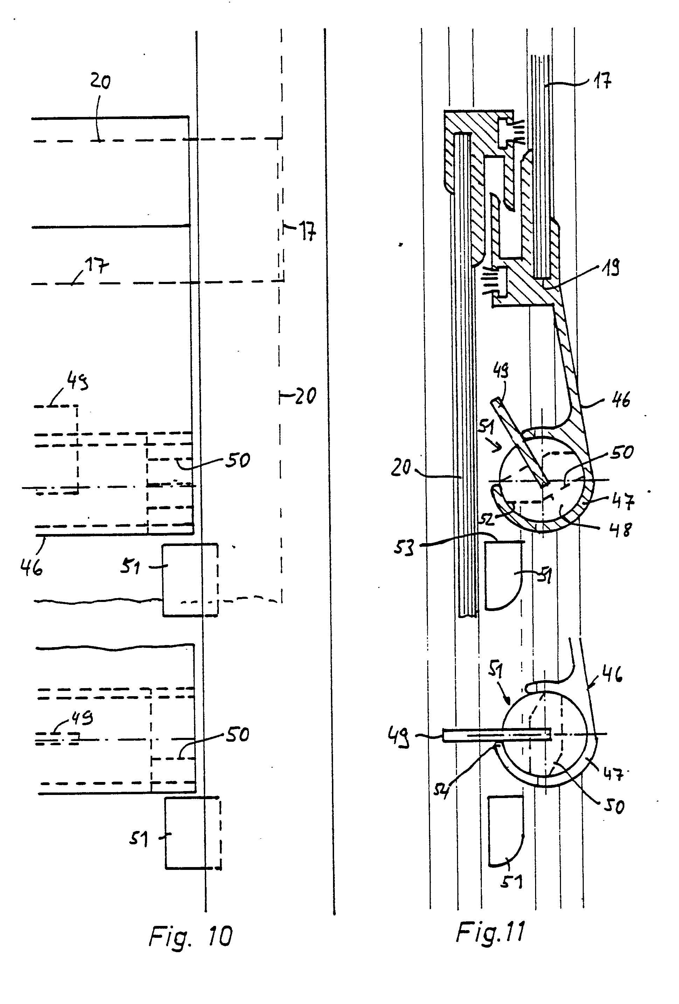

Die Fig. 10 zeigt eine Ansicht der unteren rechte Ecke der äußeren Scheibe 17, von draußen gesehen. Man erkennt das den unteren Rand der äußeren Scheibe 17 einfassende Griffteil 46 mit zylindrischem Gehäuse 47, darin verdrehbarem Zylinderteil 48, daran befestiger Betätigungsleiste 49 sowie die am Ende des Zylinderteils angeformte Nocke 50. Außerdem sind zwei rahmenfeste Anschläge 51 übereinander angeordnet. In der oben dargestellten Stellung des Betätigungsglieds 51 schlägt die Unterseite 52 des Nockens 50 bei der Bewegung der äußeren Scheibe 17 nach unten auf die Anschlagfläche 53 des Anschlags 51 auf, so daß die weitere Bewegung der Scheibe 17 gesperrt ist. Dies ist für die Sicherheit der Terrassenverglasung von großer Bedeutung, weil dadurch ausgeschlossen wird, daß eine Scheibe ungewollt nach unten gleitet.

In der unteren, lediglich hilfsweise eingezeichneten Stellung des Betätigungsglieds 51 kann die Scheibe nach unten gezogen werden, indem die Finger von außen nach innen auf die Oberseite der Betätigungsleiste 49 drücken, welche auf dem unteren Rand 54 der Öffnung des zylindrischen Gehäuses 47 der Griffleiste 46 anschlägt. In dieser Position ist der Nocken 50 in die Vertikale verschwenkt, so daß er am Anschlag 51 vorbeigleitet.

Solange die innere Scheibe 20 nach innen hin den Griffteil 46 abdeckt, ist es unmöglich, die äußere Scheibe 17 zu bewegen. Dies wird erst dadurch möglich, daß die innere Scheibe 20 so weit nach oben geschoeben wird, bis, wie in Fig. 11 in der unteren Darstellung gezeigt, die Betätigungsleiste 49 zugänglich ist. Ein Unbefugter kann also von Außen die äußere Scheibe 17 nicht bewegen, solange die innere Scheibe 20 in der unteren Anschlagstellung steht. Die innere Scheibe 20 wiederum läßt sich nur von innen betätigen. Zumindest solange sie arretiert ist, besteht keine Möglichkeit, die Verglasung von außen zu öffnen.

Die Darstellung gem. den Fig. 10 und 11 entspricht einem Schnitt in der Ebene XI der Fig. 3, also in Höhe der Unterkante 19 der äußeren Scheibe 17. Die äußere Scheibe 17 ist hier in der oberen Anschlagstellung, während die innere Scheibe 20 sich in der unteren Anschlagstellung befindet.

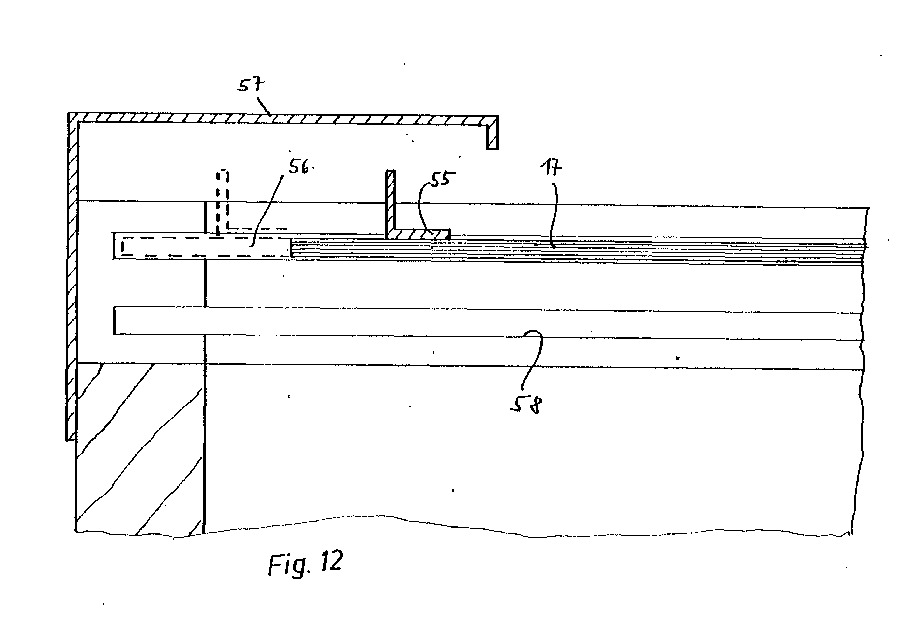

Fig. 12 zeigt einen Schnitt in der Ebene XII der Fig. 3. Die äußere Scheibe 17 befindet sich nahe ihrer strichliert eingezeichneten Endstellung. Sie besitzt an ihrer Außenseite ein quer über die gesamte Scheibe verlaufendes, sie aussteifendes Winkelprofil 55, welches gleichzeitig eine Barriere gegen aufsteigendes Regenwasser darstellt. In der gezeichneten Position gibt die obere Scheibe 17 eine Lüftungsöffnung 56 frei, welche nach oben durch ein Randprofil 57 abgedeckt ist. Unterhalb der äußeren Scheibe 17 erkennt man die Führung 58 für die innere Scheibe.

## Patentansprüche

1. Terrassenverglasung, welche die folgenden Merkmale aufweist :

a) Sie besteht aus einem gewölbten Dach, welches oben an einer vorhandenen Wand (2) und unten an dem Terrassenboden (1) abgestützt ist, sowie aus zwei Giebelteilen (4, 5, 6).

b) Das Dach ist der Länge nach zusammengesetzt aus mehreren gleichen, verglasten Bogenelementen (3), an deren seitlichen, dichtend miteinander verbindbaren Rahmenteilen (21) jeweils zwei Glasscheiben (17, 20) in verschiedenen Ebenen verschiebbar geführt sind.

c) Die Giebelteile (4, 5, 6) sind jeweils zusammengesetzt aus drei Giebelelementen, nämlich einem quadratischen Grundelement (4) und zwei Anschlußelementen (5, 6) mit jeweils einem entsprechend den Bogenelementen (3) geformten Rahmenbogen (7), welcher zwei zueinander rechtwinkelige Rahmenschenkel (8, 9) verbindet, von welchen einer (9) die Länge einer Seite des Grundelements (4) aufweist.

2. Terrassenverglasung nach Anspruch 1, dadurch gekennzeichnet, daß die Rahmenbogen (7) beider Anschlußelemente (5, 6) zusammen einen den Bogenelementen (3) entsprechenden Bogen bilden, wobei die Rahmenbogen (7) gleiche oder unterschiedliche Bogenabschnitte bilden.

3. Terrassenverglasung nach Anspruch 1, dadurch gekennzeichnet, daß zwischen den seitlichen Rahmenteilen (21) der Bogenelemente (3) im Bereich ihrer oberen Endabschnitte Quer- (13) und/oder Diagonalstreben (14) vorgesehen sind.

4. Terrassenverglasung nach Anspruch 1, dadurch gekennzeichnet, daß die seitlichen Rahmenteile (21) jeweils im Bereich ihrer oberen und unteren Endabschnitte (e) geradlinig ausgebildet sind.

5. Terrassenverglasung nach Anspruch 4, dadurch gekennzeichnet, daß die seitlichen Rahmenteile (21) jeweils im Bereich zwischen ihren oberen und unteren Endabschnitten (e) einen Kreisbogen beschreiben, dessen Radius etwas kleiner ist als die Diagonale des Grundelements (4).

6. Terrassenverglasung nach Anspruch 1 dadurch gekennzeichnet, daß die äußere Glasscheibe (17) der Bogenelemente (3) länger ist als die innere, derart, daß erst bei entsprechend weit nach oben geschobener innerer Scheibe (20) ein Griffteil (46) zur Betätigung der äußeren Scheibe (17) freigegeben wird.

7. Terrassenverglasung nach Anspruch 1, dadurch gekennzeichnet, daß die seitlichen Rahmenteile (21) der Bogenelemente (3) übereinander gesteckte Profilteile umfassen, wobei ein Außen- (22) und ein Innenprofil (24) über ein Zwischenprofil (23) verbunden sind, welches mit dem jeweiligen Außen- bzw. Innenprofil eine Scheibenführung bildet.

8. Terrassenverglasung nach Anspruch 1, dadurch gekennzeichnet, daß die Glasscheiben (17, 20) jeweils an ihren unteren Enden Griffteile (31, 46) aufweisen, welche seitlich vorspringende Nocken (32, 50) besitzen, die mit Anschlägen (34, 38 ; 51) an den Rahmenteilen (21) zusammenwirken.

9. Terrassenverglasung nach Anspruch 8, dadurch gekennzeichnet, daß mehrere Anschläge (34, 38, 51) in verschiedenen Höhen vorgesehen sind, und daß die Griffteile (31, 46) jeweils ein Betätigungsglied (40, 51) aufweisen, bei dessen Verstellen die Nocken (32, 50) in eine entsperrende Position außer Eingriff mit den Anschlägen (34, 38, 51) bringbar sind.

10. Terrassenverglasung nach Anspruch 9, dadurch gekennzeichnet, daß das Betätigungsglied (40, 51) in der Ausgangslage durch Federkraft in einer die Nocken (32, 50) mit den Anschlägen (34, 38, 51) sperrenden Position gehalten ist.

11. Terrassenverglasung nach den Ansprüchen 9 und 10, dadurch gekennzeichnet, daß das Betätigungsglied (40, 51) ein in einem Gehäuse (39, 47) des Griffteils (31, 46) drehbar gelagertes Zylinderteil (42, 48) ist, an dessen Stirnseiten die Nocken (32, 50) ausgebildet sind.

12. Terrassenverglasung nach Anspruch 11, dadurch gekennzeichnet, daß das Zylinderteil (42, 48) mit einer Betätigungsleiste (41, 49) versehen ist, welche durch eine schlitzförmige, die beiden Betätigungsstellungen des Betätigungsglieds (40, 51) begrenzende Öffnung des Gehäuses (39, 47) des Griffteils (31, 46) nach außen ragt.

13. Terrassenverglasung nach Anspruch 12, dadurch gekennzeichnet, daß das Griffteil (46) der äußeren Scheibe (17) nach außen abragt und dessen Betätigungsleiste (49) in der entsperrenden Position etwa senkrecht zur Scheibe (17) steht.

14. Terrassenverglasung nach Anspruch 12, dadurch gekennzeichnet, daß das Griffteil (31) der inneren Scheibe (20) nach innen abragt und dessen Betätigungsleiste (41) in der entsperrenden Position etwa parallel zur Scheibe (20) steht.

15. Terrassenverglasung nach den Ansprüchen 1 und 3, dadurch gekennzeichnet, daß die Quer- (13) und/oder Diagonalstreben (14) an ihrer Oberseite Auflagepuffer oder Rollen (15) tragen, welche dicht unter der äußeren Scheibe (17) angeordnet sind, um diese zur stützen, wenn sie sich unter einer Schneelast durchbiegt.

**Claims**

1. Glazing for terraces, which comprises the following features :
   a) It consists of a vaulted roof, which is supported at the top on an existing wall (2) and at the bottom on the terrace floor (1), and of two gable parts (4, 5, 6).
   b) Along the length, the roof is composed of several identical, glazed arched members (3), on the lateral frame parts (21) of which, which can be connected to each other in a sealed manner, two glass panes (17, 20) respectively are guided to move in different planes.
   c) The gable parts (4, 5, 6) are each composed of three gable members, namely a square basic member (4) and two connecting members (5, 6) each with a frame arch (7) shaped to correspond to the arched members (3), which frame arch (7) connects two frame sides (8, 9) at right angles to each other, of which one (9) is the length of one side of the basic member (4).

2. Glazing for terraces according to Claim 1, characterised in that the frame arches (7) of both connecting members (5, 6) together form an arch corresponding to the arched members (3), the frame arches (7) forming identical or different arch sections.

3. Glazing for terraces according to Claim 1, characterised in that provided between the lateral frame parts (21) of the arched members (3) in the region of their upper end sections are transverse struts (13) and/or diagonal struts (14).

4. Glazing for terraces according to Claim 1, characterised in that in the region of their upper and lower end sections (e), the lateral frame parts (21) are respectively constructed in a rectilinear manner.

5. Glazing for terraces according to Claim 4, characterised in that in the region between their upper and lower end sections (e), the lateral frame parts (21) respectively describe a circular arc, the radius of which is somewhat smaller than the diagonal of the basic member (4).

6. Glazing for terraces according to Claim 1, characterised in that the outer glass pane (17) of the arched members (3) is longer than the inner glass pane so that only when the inner pane (20) is pushed upwards correspondingly far is a handle (46) for actuating the outer pane (17) exposed.

7. Glazing for terraces according to Claim 1, characterised in that the lateral frame parts (21) of the arched members (3) comprise profiled parts fitted one above the other, an outer profile (22) and an inner profile (24) being connected by way of an intermediate profile (23), which with the respective outer or inner profile forms a pane guide.

8. Glazing for terraces according to Claim 1, characterised in that at their lower ends the glass panes (17, 20) each comprise handles (31, 46), which comprise laterally projecting cams (32, 50), which co-operate with stop members (34, 38 ; 51) on the frame parts (21).

9. Glazing for terraces according to Claim 8, characterised in that several stop members (34, 38, 51) are provided at different heights and that the handles (31, 46) each comprise an actuating member (40, 51), upon the displacement of which the cams (32, 50) can be brought into an unlocking position out of engagement with the stop members (34, 38, 51).

10. Glazing for terraces according to Claim 9, characterised in that in the initial position, the actuating member (40, 51) is held by spring force in a position locking the cams (32, 50) with the stops (34, 38, 51).

11. Glazing for terraces according to Claims 9 and 10, characterised in that the actuating member (40, 51) is a cylindrical part (42, 48) mounted to rotate in a housing (39, 47) of the handle (31, 46), on whose end faces the cams (32, 50) are formed.

12. Glazing for terraces according to Claim 11, characterised in that the cylindrical part (42, 48) is provided with an actuating bar (41, 49), which projects outwards through a slot-like opening in the housing (39, 47) of the handle (41, 46), defining the two actuating positions of the actuating member (40, 51).

13. Glazing for terraces according to Claim 12, characterised in that the handle (46) of the outer pane (17) projects outwards and its actuating bar (49) is approximately perpendicular to the pane (17) in the unlocking position.

14. Glazing for terraces according to Claim 12, characterised in that the handle (31) of the inner pane (20) projects inwards and its actuating bar (41) is approximately parallel to the pane (20) in the unlocking position.

15. Glazing for terraces according to Claims 1 and 3, characterised in that on their upper side, the transverse struts (13) and/or diagonal struts (14) carry support buffers or rollers (15), which are arranged close below the outer pane (17), in order to support the latter, if it bends under the weight of snow.

**Revendications**

1. Vitrage pour terrasse qui présente les caractéristiques suivantes :

a) Il se compose d'un toit cintré qui s'appuie à sa partie supérieure sur un mur existant (2) et à sa partie inférieure au sol (1) de la terrasse, ainsi que de deux frontons (4, 5, 6).

b) Dans le sens de la longueur, le toit est composé de plusieurs éléments cintrés (3), vitrés et identiques, deux vitres (17, 20) étant guidées pour chacun d'eux, en pouvant se déplacer dans des plans différents, sur leurs parties de cadre latérales (21) qui peuvent être reliées entre elles de manière étanche.

c) Chaque fronton (4, 5, 6) est composé de trois éléments, à savoir un élément de base carré (4) et deux éléments de raccordement (5, 6) dont chacun comprend un bord de cadre courbe (7) qui est conforme en correspondance avec les éléments cintrés (3) et qui relie deux bords de cadre (8, 9) perpendiculaires entre eux dont l'un (9) présente la longueur d'un côté de l'élément de base (4).

2. Vitrage pour terrasse selon la revendication 1, caractérisé par le fait que les bords de cadre courbes (7) des deux éléments de raccordement (5, 6) forment ensemble un arc qui correspond aux éléments cintrés (3), les bords de cadre courbes (7) formant des portions d'arc identiques ou différentes.

3. Vitrage pour terrasse selon la revendication 1, caractérisé par le fait que des contrefiches transversales (13) et/ou diagonales (14) sont prévues entre les parties de cadre latérales (21) des éléments cintrés (3) dans la région de leurs portions terminales supérieures.

4. Vitrage pour terrasse selon la revendication 1, caractérisé par le fait que les parties de cadre latérales (21) sont à chaque fois réalisées sous forme rectiligne dans la région de leurs portions terminales supérieures et inférieures (e).

5. Vitrage pour terrasse selon la revendication 4, caractérisé par le fait que les parties de cadre latérales (21), dans la région comprise entre leurs portions terminales supérieures et inférieures (e), décrivent à chaque fois un arc de cercle dont le rayon est légèrement inférieur à la diagonale de l'élément de base (4).

6. Vitrage pour terrasse selon la revendication 1, caractérisé par le fait que la vitre extérieure (17) des éléments cintrés (3) est plus longue que la vitre intérieure, de telle sorte qu'un organe de préhension (46) destiné à l'actionnement de la vitre extérieure (17) n'est libéré que lorsque la vitre intérieure (20) est poussée suffisamment loin vers le haut.

7. Vitrage pour terrasse selon la revendication 1, caractérisé par le fait que les parties de cadre latérales (21) des éléments cintrés (3) comprennent des pièces profilées enfoncées l'une au-dessus de l'autre, un profilé extérieur (22) et un profilé intérieur (24) étant reliés par un profilé intermédiaire (23) qui constitue un guidage pour les vitres avec le profilé extérieur ou intérieur correspondant.

8. Vitrage pour terrasse selon la revendication 1, caractérisé par le fait que les vitres (17, 20) comportent à chaque fois à leurs extrémités inférieures des organes de préhension (31, 46) comprenant des cames (32, 50) qui sont en saillie latéralement et qui coopèrent avec des butées (34, 38 ; 51) ménagées sur les parties de cadre (21).

9. Vitrage pour terrasse selon la revendication 8, caractérisé par le fait que plusieurs butées (34, 38 ; 51) sont prévues à des hauteurs différentes, et par le fait que chacun des organes de préhension (31, 46) comporte un organe d'actionnement (40, 51) dont le déplacement permet d'amener les cames (32, 50) dans une position de déverrouillage où elles sont hors de prise avec les butées (34, 38 ; 51).

10. Vitrage pour terrasse selon la revendication 9, caractérisé par le fait que l'organe d'actionnement (40, 51), dans sa position de départ, est maintenu par une force élastique dans une position qui verrouille les cames (32, 50) au moyen des butées (34, 38 ; 51).

11. Vitrage pour terrasse selon les revendications 9 et 10, caractérisé par le fait que l'organe d'actionnement (40, 51) est constitué par une pièce cylindrique (42, 48) qui est montée tournante dans un logement (39, 47) ménagé dans l'organe de préhension (31, 46), et sur les côtés frontaux de laquelle sont réalisées les cames (32, 50).

12. Vitrage pour terrasse selon la revendication 11, caractérisé par le fait que la pièce cylindrique (42, 48) est munie d'une baguette d'actionnement (41, 49) qui fait saillie vers l'extérieur à travers une ouverture en forme de fente du logement (39, 47) de l'organe de préhension (31, 46), laquelle délimite les deux positions d'actionnement de l'organe d'actionnement (40, 51).

13. Vitrage pour terrasse selon la revendication 12, caractérisé par le fait que l'organe de préhension (46) de la vitre extérieure (17) est en saillie vers l'extérieur, et que sa baguette d'actionnement (49) est sensiblement perpendiculaire à la vitre (17) dans la position de déverrouillage.

14. Vitrage pour terrasse selon la revendication 12, caractérisé par le fait que l'organe de préhension (31) de la vitre intérieure (20) est en saillie vers l'intérieur et que sa baguette d'actionnement (41) est sensiblement parallèle à la vitre (20) dans la position de déverrouillage.

15. Vitrage pour terrasse selon les revendications 1 et 3, caractérisé par le fait que les contrefiches transversales (13) et/ou diagonales (14) portent sur leur côté supérieur des tampons d'appui ou des galets (15) qui sont disposés sous la vitre extérieure (17) et tout près de celle-ci, afin de la soutenir lorsqu'elle fléchit sous le poids de la neige.

Fig. 1

Fig. 2

Fig. 4

Fig. 3

Fig. 5

Fig. 6

Fig. 7

Fig. 9

Fig. 8

3

Fig. 10

Fig. 11

Fig. 12

Fig. 13

Fig. 14

17    15

18

13

17

15

13

EP 0 215 077 B1

*Fig. 15*

Fig. 16